# EUROPEAN PATENT APPLICATION

(11) **EP 2 359 679 A1**
(43) Date of publication of application: **24.08.2011**
(21) Application number: 09828752.7
(22) Date of filing: 27.08.2009
(51) Int. Cl.: A01G 7/06, A01N 3/02, A61L 9/01

(54) **FRAGRANCE SUPPRESSOR FOR ORNAMENTAL FLOWER**

(30) Priority: 26.11.2008 JP 2008300353
(71) Applicant: Incorporated Administrative Agency National Agriculture and Food Research Organization, Ibaraki 305-8517 (JP)
(72) Inventor: OKUBO, Naomi, Tsukuba-shi Ibaraki 305-8519 (JP)
(74) Representative: Hartz, Nikolai
(86) International application number: PCT/JP2009/004167
(87) International publication number: WO 2010/061502

(57) **Abstract**

The present invention provides a fragrance suppressor for an ornamental plant containing a phenylalanine ammonia-lyase inhibitor as an active ingredient, a method for suppressing a fragrance of an ornamental plant, which contains immersing a cut area of a cut flower in an aqueous solution of a phenylalanine ammonia-lyase inhibitor, and an ornamental plant which has been subjected to fragrance suppression treatment through the method.

According to the present invention, biosynthesis of the aromatic fragrance compounds and terpenoids which an ornamental plant possesses is inhibited, whereby the levels of these fragrance compounds can be considerably reduced. Therefore, the fragrance of an ornamental plant can be readily suppressed according to time, place and occasion. The phenylalanine ammonia-lyase inhibitor, serving as the active ingredient, is readily available on the market as a reagent at low cost.

## Description

### Technical Field

The present invention relates to a fragrance suppressor for an ornamental plant, which suppressor can readily suppress the fragrance of an ornamental plant.

### Background Art

Fragrance is one of the important characteristics of ornamental plants and greatly stimulates the consumers' willingness to purchase. Among ornamental plants, *Lilium* cv. 'Casa Blanca', which emits a sweet, flowery, and strong fragrance, is popular for wedding bouquets and gifts. However, Casa Blanca' is often avoided in restaurants and bars due to its strong fragrance. Also, when a single stem of 'Casa Blanca' is placed in a small, closed room in a house, the strong fragrance causes people in the room to have a bad feeling, and those who are sensitive to odor are prone to reject the fragrance as a malodor.

Thus, there is demand for a technique for readily suppressing the fragrance of an ornamental plant according to time, place and occasion, so long as the technique does not adversely affect the qualities of the ornamental plant other than fragrance, such as shape, size, and color of the flower.

Hitherto, there have been proposed techniques for controlling the odor of plants; e.g., a deodorant for plants containing a dihydric alcohol and a fragrance compound glycoside as active ingredients for use in reduction of the malodor of plants such as *Gypsophila* (Patent Document 1) and a freshness-keeping or deodorant composition containing, as a predominant ingredient, an inorganic-organic hybrid compound formed from titanium and an organic acid, or an organic acid and a metal salt thereof (Patent Document 2).

However, the effect of the former technique has been confirmed only on isovaleric acid, which is a malodorous component of *Gypsophila,* and the effects on other malodorous components have not yet been elucidated. The latter technique is employed for deodorizing "formaldehyde," which is generated during oxidation of ethylene gas performed in order to maintain freshness of the plant, and the technique is targeted for odorous components which completely differ from fragrances intrinsic to plants.

(Aminooxy)acetic acid hemihydrochloride (AOA) is known to be an agent for maintaining freshness of plants by virtue of its ethylene biosynthesis inhibiting performance (see, for example, Patent Document 3). However, no effect of AOA on the fragrance of plants has been known.

### Prior Art Documents

### Patent Documents

Patent Document 1: JP-A-1998-33647
Patent Document 2: JP-A-2006-129707
Patent Document 3: JP-A-2000-169302

### Summary of the Invention

It is an object of the present invention is to provide a fragrance suppressor for an ornamental plant which contains a readily available substance as an active ingredient and which can readily suppress or remove a strong fragrance of an ornamental plant.

The present inventor has analyzed the fragrance compounds emitted from 'Casa Blanca' and has identified about 20 compounds shown in Table 1 given below. As a result, linalool, cis-ocimene, isoeugenol, etc. were detected as the major fragrance compounds and cresol and creosol as characteristic minor components. Particularly, the latter two compounds were thought to be causal substances for malodor. Based on the fact that aromatic fragrance compounds including these malodor causal substances are biosynthesized via shikimic acid, phenylalanine, *t*-cinnamic acid, etc., the present inventor has conceived that formation of such causal substances is suppressed by use of a substance which inhibits the above biosynthesis pathway. In addition, the inventor has confirmed that biosynthesis of not only aromatics but also terpenoids can be inhibited by use of a phenylalanine ammonia-lyase inhibitor, which is such a biosynthesis inhibitor, whereby the fragrance compound level can be considerably reduced. The present invention has been accomplished on the basis of this finding.

The present invention provides a fragrance suppressor for an ornamental plant comprising a phenylalanine ammonia-lyase inhibitor as an active ingredient.

The present invention also provides a method for suppressing a fragrance of an ornamental plant, which method comprises immersing a cut area of a cut flower in an aqueous solution containing 0.01 to 5 mM of a phenylalanine ammonia-lyase inhibitor.

The present invention also provides an ornamental plant which has been subjected to fragrance suppression treatment through the aforementioned method.

According to the present invention, biosynthesis of the aromatics and terpenoids which an ornamental plant possesses is inhibited, whereby the levels of these fragrance compounds can be considerably reduced. Therefore, the strong fragrance of an ornamental plant can be readily suppressed according to time, place and occasion. The phenylalanine ammonia-lyase inhibitor, serving as the active ingredient, is readily available on the market as a reagent at low cost.

### Modes for Carrying Out the Invention

Examples of the phenylalanine ammonia-lyase inhibitor which is used as an active ingredient in the present invention include (aminooxy)acetic acid hemihydrochloride (AOA) and 2-(aminooxy)-3-phenylpropanoic acid (AOPP). These compounds may be used singly or in combination of two or more species.

The fragrance suppressor concentration used for an ornamental plant in the present invention, which varies depending on the type of the target ornamental plant and the treatment time, is generally 0.01 to 5 mM as the phenylalanine ammonia-lyase inhibitor concentration of the aqueous solution, preferably 0.05 to 1.5 mM, particularly preferably 0.1 to 1 mM.

The fragrance suppressor for an ornamental plant of the present invention may contain, in addition to the phenylalanine ammonia-lyase inhibitor, a compound which can suppress a fragrance compounds other than aromatics and terpenoids. Examples of the additional compound include dihydric alcohols having a deodorant effect on isovaleric acid, such as ethylene glycol, propylene glycol, and 1,4-butanediol (Patent Document 1).

If required, the fragrance suppressor for an ornamental plant of the present invention may further contain known agents for prolonging cut flower life such as Chrysal (product of Pokon & Chrysal Japan), Algoflash (product of Alpatio), and KOTO Fresh (product of Koto Co.); anionic surfactants such as alkylbenzenesulfonic acid salts, polyoxyethylene alkylsulfuric acid salts, sulfosuccinic acid salts, and amino acid-based anionic surfactants; nonionic surfactants such as polyoxyethylene alkyl ethers, sorbitan fatty acid esters, alkyl polyglycosides, fatty acid glycoside esters, and cephalin; other surfactants such as phospholipids (e.g., lecithin and phosphatidic acid) and glycolipids (e.g., sophorolipid); nutrients such as nitrogen, phosphoric acid, potassium, sucrose, and vitamin C; micronutrients such as iron, zinc, manganese, copper, and boron; and phytohormones such as auxin, cytokinin, gibberellin, abscisic acid, and brassinolide.

The fragrance suppressor for an ornamental plant of the present invention may be used for a variety of ornamental plants possessing aromatic fragrance compounds and terpenoid fragrance compounds. Particularly, the fragrance suppressor is preferably used for plants belonging to *Liliaceae Lilium,* particularly lilies having a strong fragrance such as oriental hybrids (e.g., 'Casa Blanca' and 'Sorbonne'), OT hybrids (oriental-trumpet hybrids , e.g., `Yelloween'), and *Lilium longiflorum;* and other ornamental plants having fragrance which may be disliked by someone such as *Matthiola incana.* The fragrance suppressor is applied to the ornamental plant in the form of cut flowers.

The fragrance suppression treatment is preferably performed before efflorescence (bud state) of the target ornamental plant, in order to attain higher fragrance suppression effect.

In one mode of suppression of the fragrance of an ornamental plant by use of the fragrance suppressor for an ornamental plant of the present invention, the cut area of the cut flower is treated in the fragrance suppressor for an ornamental plant of the present invention so that the suppressor is absorbed by the plant. When the fragrance suppressor for an ornamental plant of the present invention is absorbed to the plant through cut area, biosynthesis of aromatic fragrance compounds and terpenoid fragrance compounds is inhibited, whereby a possible malodor can be suppressed.

### Examples

### Example 1: Effect of AOA on suppression of the fragrance of 'Casa Blanca' (oriental hybrid)

The present inventor analyzed the fragrance compounds emitted from 'Casa Blanca' on day 1 after flowering through the following procedure. Firstly, cut flowers of 'Casa Blanca' each having 4 to 5 flowers (buds) were placed in distilled water in a growth chamber at a constant temperature of 23°C and a 12/12 h (8:00-20:00 light/20:00-8:00 dark) photoperiod. One day after flowering, only the flowers were placed in a 3L Tedlar bag having an inlet and an outlet, and then the bag was sealed. A constant stream of air was through activated charcoal and then piped through the bag, and volatiles were collected with a Tenax-TA tube for one hour (10:00-11:00). Fragrance compounds were analyzed by GC-MS (GC:
Agilent 6890N, MS: Agilent 5973N). As the result, 20 compounds were identified. Table 1 shows the results.

**[Table 1]**

| Emitted fragrance compounds of *Lilium* cv.'Casa Blanca' (Day 1 after flowering) | |
|---|---|
| Compounds | Proportions (mass%) |
| Benzoic acid | 0.36 |
| Methyl benzoate | 0.24 |
| Benzyl benzoate | 0.10 |
| Isoeugenol | 5.57 |
| Indol | 0.30 |
| 2-Ethylhexanol | 0.56 |
| Eugenol | 0.72 |
| p-Creosol | 0.19 |
| p-Cresol | 0.04 |
| Geraniol | 0.54 |
| Geranyl acetate | 0.05 |
| cis-Ocimene | 37.90 |
| trans-Ocimene | 1.76 |
| Vanillin | 0.13 |
| α-Farnesene | 0.13 |
| 2-Phenylethanol | 0.47 |
| Benzyl alcohol | 7.02 |
| Benzaldehyde | 3.35 |
| β-Myrcene | 2.47 |
| Linalool | 38.10 |
| Total | 100.00 |

Next, (aminooxy)acetic acid hemihydrochloride (AOA) was dissolved in distilled water and 0.1 mM and 1 mM AOA aqueous solutions were prepared. Distilled water served as the control. Cut flowers (buds) of 'Casa Blanca' were placed in the test solutions for 24 hours. Emission compounds of the treated flowers were collected and analyzed. The level of each fragrance compound (24 hours after) relative to 1 (control value) was determined. Table 2 shows the results.

**[Table 2]**

| Ratios of fragrance compounds of 'Casa Blanca' 24 hours after AOA treatment(relative values to 1 (control)) | | |
|---|---|---|
| Compounds | Proportions (mass%) | |
| | AOA 0.1 mM | AOA 1 mM |
| Benzoic acid | 2.24 | 0 |
| Methyl benzoate | 0.14 | 0.06 |
| Benzyl benzoate | 0.05 | 0.17 |
| Isoeugenol | 0.15 | 0.21 |
| Indol | 0 | 0 |
| 2-Ethylhexanol | 2.47 | 1.13 |
| Eugenol | 0.12 | 0.1 |
| p-Creosol | 0.41 | 0 |
| p-Cresol | 0 | 0 |
| Geraniol | 0.05 | 0 |
| Geranyl acetate | 0 | 0 |
| cis-Ocimene | 0.1 | 0.11 |
| trans-Ocimene | 0.08 | 0.08 |
| Vanillin | 0.23 | 0.17 |
| α-Farnesene | 0.34 | 0.47 |
| 2-Phenylethanol | 0.07 | 0.3 |
| Benzyl alcohol | 0.22 | 0.08 |
| Benzaldehyde | 0.1 | 0.03 |
| β-Myrcene | 0.06 | 0 |
| Linalool | 0.11 | 0.12 |
| Total | 0.14 | 0.12 |

As a result, 24 hours after treatment, the fragrance of the AOA-treated samples was virtually weakened, and emitted fragrance compounds were considerably reduced as compared with the control.. The sample immersed in the high concentration solution (1mm aqueous solution) exhibited a slightly smaller level of efflorescence, as compared with the control sample. The sample immersed in the low concentration solution (0.1mM aqueous solution) exhibited flowers of the same morphology and other properties as those of the control sample.

### Example 2: Effect of AOA on suppression of the fragrance of Lilium cv. 'Sorbonne' (oriental hybrid)

The emitted scent compounds of *Lilium* cv. 'Sorbonne' on day 1 after flowering were analyzed as follows. Firstly, cut flowers of 'Sorbonne' each having 3 to 4 flowers (buds) were placed in distilled water in a growth chamber at a constant temperature of 23°C and a 12/12 h (8:00-20:00 light/20:00-8:00 dark) photoperiod. One day after flowering, only the flowers were placed in a 3L Tedlar bag having an inlet and an outlet, and then the bag was sealed. A constant stream of air was through activated charcoal and then piped through the bag, and volatiles were collected with a Tenax-TA tube for one hour (10:00-11:00).

The same analysis method as 'Casa Blanca' was used. As the result, 19 compounds were identified. Table 3 shows the results.

**[Table 3]**

| Emitted fragrance compounds of *Lilium* cv. `Sorbonne'(Day 1 after flowering) | |
|---|---|
| Compounds | Proportions (mass%) |
| Acetophenone | 0.82 |
| Ethyl benzoate | 0.59 |
| Methyl benzoate | 35.17 |
| Butyl benzoate | 0.41 |
| Benzyl benzoate | 9.43 |
| Isoeugenol | 3.64 |
| 2-Ethylhexanol | 0.61 |
| Eugenol | 0.88 |
| p-Creosol | 1.7 |
| p-Cresol | 0.68 |
| Geraniol | 1.45 |
| Geranyl acetate | 0.03 |
| cis-Ocimene | 24.74 |
| trans-Ocimene | 1.09 |
| Vanillin | 1.01 |
| β-Pinene | 2.78 |
| α-Farnesene | 0.17 |
| Benzaldehyde | 7.08 |
| Linalool | 6.19 |
| Others | 1.53 |
| Total | 100.00 |

Next, 0.1mM and 1mM AOA aqueous solutions were prepared and distilled water served as the control. Cut flowers (buds) of 'Sorbonne' were placed in the test solutions for 24 hours. Emission compounds of the treated flowers were collected and analyzed as previously explained. The level of each fragrance compound (24 hours after) relative to 1 (control value) was determined. Table 4 shows the results.
As a result, 24 hours after treatment, the fragrance of the AOA-treated samples was virtually weakened, and emitted fragrance compounds were considerably reduced as compared with the control. The appearance of 0.1 mM AOA-treated flowers was similar to the control, however 1.0 mM AOA had effect on flower quality. The pink color of 1.0 mM AOA treated flower exhibited fading as compared with the control.

**[Table 4]**

| Ratios of fragrance compounds of 'Sorbonne' 24 hours after AOA treatment (relative values to 1 (control)) | | |
|---|---|---|
| Compounds | Proportions (mass%) | |
| | AOA 0.1 mM | AOA 1 mM |
| Acetophenone | 0 | 0 |
| Ethyl benzoate | 0 | 0 |
| Methyl benzoate | 0.14 | 0.06 |
| Butyl benzoate | 0.98 | 0.37 |
| Benzyl benzoate | 0.13 | 0 |
| Isoeugenol | 0.1 | 0.11 |
| 2-Ethylhexanol | 1.42 | 4.14 |
| Eugenol | 0 | 0 |
| p-Creosol | 0.25 | 0.11 |
| p-Cresol | 0 | 0 |
| Geraniol | 0 | 0 |
| Geranyl acetate | 0 | 0 |
| cis-Ocimene | 0.23 | 0.2 |
| trans-Ocimene | 0.22 | 0.14 |
| Vanillin | 0 | 0 |
| β-Pinene | 0 | 0 |
| α-Farnesene | 0 | 0 |
| Benzaldehyde | 0.06 | 0 |
| Linalool | 0.07 | 0.17 |
| Total | 0.15 | 0.12 |

### Example 3: Effect of AOA on suppression of the fragrance of Lilium cv. 'Yelloween' (OT hybrid)

The emitted scent compounds of *Lilium* cv. 'Yelloween' were analyzed as follows on day 2 after flowering, when sufficient intensity of fragrance was ensured. Firstly, cut flowers of 'Yelloween' each having 3 to 4 flowers (buds) were placed in distilled water in a growth chamber at a constant temperature of 23°C and a 12/12 h (8:00-20:00 light/20:00-8:00 dark) photoperiod. Two day after flowering, only the flowers were placed in a 3L Tedlar bag having an inlet and an outlet, and then the bag was sealed. A constant stream of air was through activated charcoal and then piped through the bag, and volatiles were collected with a Tenax-TA tube for one hour (10:00-11:00). The same analysis method as 'Casa Blanca' was used. As the result, 20 compounds shown in Table 5 were identified..

**[Table 5]**

| Emitted fragrance compounds of *Lilium* cv. 'Yelloween' (Day 2 after flowering) | |
|---|---|
| Compounds | Proportions (mass%) |
| Ethyl benzoate | 6.71 |
| Methyl benzoate | 18.89 |
| Benzyl benzoate | 2.42 |
| Isoeugenol | 2.64 |
| Indol | 0.88 |
| Eugenol | 0.65 |
| p-Creosol | 1.76 |
| Geraniol | 0.99 |
| Phenylethyl acetate | 4.32 |
| cis-Ocimene | 10.66 |
| α-Terpineol | 2.49 |
| trans-Ocimene | 0.63 |
| Vanillin | 0.75 |
| β-Pinene | 1.54 |
| Phenylacetaldehyde | 6.81 |
| 2-Phenylethanol | 0.57 |
| Benzaldehyde | 1.83 |
| Eucalyptol | 4.95 |
| Linalool | 23.82 |
| D-limonene | 4.12 |
| Others | 2.57 |
| Total | 100.00 |

Next, a 0.1mM AOA aqueous solution was prepared, and distilled water served as the control. Cut flowers (buds) of 'Yelloween' were placed in the test solutions for 48 hours. Emission compounds of the treated flowers were collected and analyzed as previously explained. The level of each fragrance compound (48 hours after) relative to 1 (control value) was determined. Table 6 shows the results.
As a result, 48 hours after treatment, the fragrance of the AOA-treated samples was virtually weakened, and the amounts of emitted compounds were reduced at about 0.5 times as compared with the control. When the AOA concentration was increased, lower leaves were gradually yellowed.

**[Table 6]**

| Ratios of fragrance compounds of 'Yelloween' 48 hours after AOA treatment | |
|---|---|
| (relative values to 1 (control)) | |
| Compounds | Proportions (mass%) |
| | AOA 0.1 mM |
| Ethyl benzoate | 0.19 |
| Methyl benzoate | 0.41 |
| Benzyl benzoate | 0.14 |
| Isoeugenol | 0.85 |
| Indol | 0.48 |
| Eugenol | 0.5 |
| p-Creosol | 0.26 |
| Geraniol | 0.46 |
| Phenylethyl acetate | 0.76 |
| cis-Ocimene | 0.42 |
| α-Terpineol | 0.34 |
| trans-Ocimene | 0.31 |
| Vanillin | 0.5 |
| β-Pinene | 0.3 |
| Phenylacetaldehyde | 0.55 |
| 2-Phenylethanol | 0.56 |
| Benzaldehyde | 0.18 |
| Eucalyptol | 0.54 |
| Linalool | 0.46 |
| D-limonene | 0.36 |
| Total | 0.43 |

### Example 4: Effect of AOA on suppression of the fragrance of Lilium longiflorum

The emitted fragrance compounds of *Lilium longiflorum* were analyzed on day 3 after flowering, when sufficient intensity of fragrance was ensured. Firstly, cut flowers of *L*. *longiflorum* each having 2 to 3 flowers (buds) were placed in distilled water in a growth chamber at a constant temperature of 23°C and a 12/12 h (8:00-20:00 light/20:00-8:00 dark) photoperiod. Three day after flowering, only the flowers were placed in a 3L Tedlar bag having an inlet and an outlet, and then the bag was sealed. A constant stream of air was through activated charcoal and then piped through the bag, and volatiles were collected with a Tenax-TA tube for one hour (10:00-11:00). The same analysis method as 'Casa Blanca' was used. As the result, 10 compounds shown in Table 7 were identified.

**[Table 7]**

| Emitted fragrance compounds of *Lilium longiflorum* | |
|---|---|
| (Day 3 after flowering) | |
| Compounds | Proportions (mass%) |
| Ethyl benzoate | 2.33 |
| Methyl benzoate | 33.33 |
| Geraniol | 0.46 |
| Cinnamyl alcohol | 0.39 |
| cis-Ocimene | 32.48 |
| trans-Ocimene | 3.79 |
| Nerolidol | 11.79 |
| α-Pinene | 3.06 |
| Eucalyptol | 2.02 |
| Linalool | 10.35 |
| Total | 100.00 |

Next, a 0.3mM AOA aqueous solution was prepared, and distilled water served as the control. Cut flowers (buds) of *L. longiflorum* were placed in the test solutions for 72 hours. Emission compounds of the treated flowers were collected and analyzed as previously explained. The level of each fragrance compound (72 hours after) relative to 1 (control value) was determined. Table 8 shows the results.
As is clear from Table 8, 72 hours after treatment, the fragrance of the AOA-treated samples was virtually weakened, and emitted fragrance compounds were reduced at about 1/5 times as compared with the control. The AOA-treated sample exhibited yellowing of lower leaves, about one week after treatment.

**[Table 8]**

| Ratios of fragrance compounds of *L*. *longiflorum* 72 hours after AOA treatment | |
|---|---|
| (relative values to 1 (control)) | |
| Compounds | Proportions (mass%) |
| | AOA 0.3 mM |
| Ethyl benzoate | 0.34 |
| Methyl benzoate | 0.46 |
| Geraniol | 0 |
| Cinnamyl alcohol | 0 |
| cis-Ocimene | 0.06 |
| trans-Ocimene | 0.07 |
| Nerolidol | 0.3 |
| β-Pinene | 0.06 |
| Eucalyptol | 0.21 |
| Linalool | 0.07 |
| Total | 0.23 |

### Example 5: Effect of AOPP on suppression of the fragrance of 'Casa Blanca'

0.1mM and 1mM 2-(aminooxy)-3-phenylpropanoic acid (AOPP) aqueous solutions were prepared, and distilled water served as the control.. Cut flowers (buds) of 'Casa Blanca' were placed in the test solutions for 24 hours. Emission compounds of the treated flowers were collected and analyzed as previously explained. The level of each fragrance compound (24 hours after) was determined. Table 9 shows the results.
As is clear from Table 9, 24 hours after treatment, the fragrance of the AOA-treated samples was virtually weakened, and the emitted fragrance compounds were considerably reduced as compared with the control.

**[Table 9]**

| Ratios of fragrance compounds of 'Casa Blanca' 24 hours after AOPP treatment | | |
|---|---|---|
| (relative values to 1 (control)) | | |
| Compounds | Proportions (mass%) | |
| | AOPP0.1 mM | AOPP 1 mM |
| Benzoic acid | 0 | 0 |
| Methyl benzoate | 0.28 | 0.08 |
| Benzyl benzoate | 0.44 | 0 |
| Isoeugenol | 0.20 | 0.49 |
| Indol | 0 | 0 |
| 2-Ethylhexanol | 1.08 | 1.32 |
| Eugenol | 0.20 | 0.49 |
| p-Creosol | 0.51 | 0.52 |
| p-Cresol | 0 | 0 |
| Geraniol | 0 | 0 |
| Geranyl acetate | 0 | 0 |
| cis-Ocimene | 0.08 | 0.07 |
| trans-Ocimene | 0.05 | 0.06 |
| Vanillin | 0 | 0 |
| α-Farnesene | 0 | 0 |
| 2-Phenylethanol | 0 | 0 |
| Benzyl alcohol | 0.24 | 0.05 |
| Benzaldehyde | 0.41 | 0.15 |
| β-Myrcene | 0.07 | 0.09 |
| Linalool | 0.03 | 0.03 |
| Total | 0.10 | 0.09 |

## Claims

1. A fragrance suppressor for an ornamental plant comprising a phenylalanine ammonia-lyase inhibitor as an active ingredient.

2. The fragrance suppressor for the ornamental plant according to claim 1, wherein the phenylalanine ammonia-lyase inhibitor is (aminooxy)acetic acid hemihydrochloride.

3. The fragrance suppressor for the ornamental plant according to claim 1 or 2, which is an aqueous solution containing 0.01 to 5 mM of a phenylalanine ammonia-lyase inhibitor.

4. The fragrance suppressor for the ornamental plant according to any one of claims 1 to 3, wherein the ornamental plant belongs to *Lilium.*

5. A method for suppressing a fragrance of an ornamental plant, which comprises immersing a cut area of a cut flower in a fragrance suppressor for an ornamental plant as recited in claim 3.

6. A method for suppressing a fragrance of an ornamental according to claim 5, wherein the ornamental plant belongs to *Lilium.*

7. An ornamental plant which has been subjected to fragrance suppression treatment through a method as recited in claim 5 or 6.
